Europäisches Patentamt

European Patent Office

Office européen des brevets

(19)

(11) Publication number: **0 168 932**
**B1**

(12) **EUROPEAN PATENT SPECIFICATION**

(45) Date of publication of patent specification: **08.03.89**

(51) Int. Cl.⁴: **F 16 D 25/08**

(21) Application number: **85303903.0**

(22) Date of filing: **03.06.85**

(54) Hydraulic slave cylinder.

(30) Priority: **13.06.84 GB 8415051**

(43) Date of publication of application:
**22.01.86 Bulletin 86/04**

(45) Publication of the grant of the patent:
**08.03.89 Bulletin 89/10**

(84) Designated Contracting States:
**DE FR IT**

(56) References cited:
**DE-A-3 043 861**
**FR-A-2 531 164**
**GB-A- 599 807**
**GB-A-2 112 490**

(73) Proprietor: **LUCAS INDUSTRIES public limited company**
**Great King Street**
**Birmingham, B19 2XF West Midlands (GB)**

(72) Inventor: **Reynolds, Desmond Henry James**
**156, Tamworth Road**
**Sutton Coldfield West Midlands (GB)**

(74) Representative: **Waite, Anthony William et al**
**MARKS & CLERK Alpha Tower Suffolk Street**
**Queensway**
**Birmingham B1 1TT (GB)**

Courier Press, Leamington Spa, England.

EP 0 168 932 B1

## Description

This invention relates to an hydraulic slave cylinder, principally for use in a vehicle clutch actuation system, and being of the kind having an annular piston and cylinder which are arranged concentrically and are relatively axially movable, under the influence of hydraulic pressure, to effect actuation.

In order to prevent possible over-stroking of the slave cylinder under certain circumstances, in use, it has been proposed to provide a travel stop for the purpose of limiting the amount of said relative movement between the piston and cylinder. In one prior arrangement, illustrated in GB-A-2112490 an abutment means forming part of a travel stop arrangement is provided on a cylinder housing defining the outermost wall of the annular cylinder. The position of the abutment means requires said cylinder wall to be of substantial strength in order not to be damaged or distorted by forces applied thereto through the travel stop arrangement in a piston over-stroke situation.

An object of the invention is to provide an hydraulic slave cylinder of the aforesaid kind in which an improved arrangement of piston over-stroke travel stop is provided.

According to the invention, an hydraulic slave cylinder comprises a cylinder housing and a concentrically arranged annular piston which are relatively axially movable under the influence of hydraulic pressure supplied to a working chamber defined partly by the cylinder housing and partly by an additional sleeve component separate from the housing and extending concentrically within the piston, the cylinder being adapted so as, in use to be secured to or retained against fixed structure, and piston travel stop means of which one part is on the movable piston or cylinder and another part is on said sleeve component, the latter having a generally radial flange trapped, in use, between opposed respective surfaces of the housing and said fixed structure.

Typically, said sleeve component supports the piston for sliding movement thereon.

The invention will now be described, by way of example, with reference to the single accompanying drawing which is a cross-sectional view of one form of the hydraulic slave cylinder of the invention arranged for use with a vehicle hydraulic clutch actuation system.

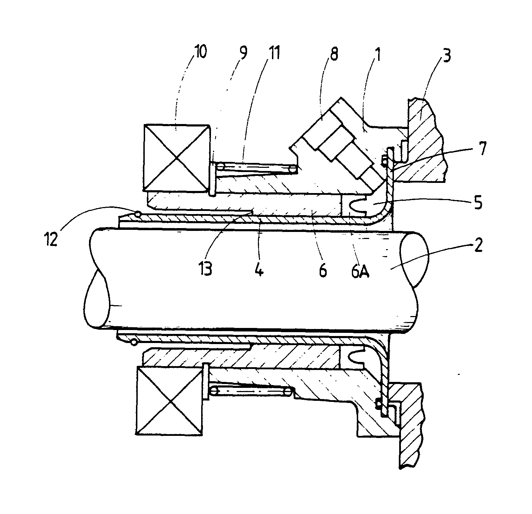

The slave cylinder illustrated in the drawing includes a cylinder housing 1 surrounding an engine to gear box drive shaft 2 and being firmly secured to or retained against, a rigid structure which, in this case, is the vehicle transmission gear box housing 3. An additional component is provided in the form of a sleeve 4 extending within and concentrically to the housing 1, being spaced from the internal surface of the latter to form an annular working chamber 5, within which is disposed an annular piston 6 slidably engaged with the internal surface of the housing 1. The sleeve 4 also extends concentrically through the piston, the latter being slidingly supported on the external surface of the sleeve. A seal 6A is provided at the pressure receiving side of the piston 6. The sleeve 4 is provided with a radial flange 7 which is trapped between the cylinder housing 1 and bell housing 3 and thereby maintained in firm abutting engagement with the latter. The housing 1 is provided with a fluid inlet 8 for admission of hydraulic actuating fluid to the working chamber 5.

The piston 6 is provided with an external abutment in the form of a circlip 9 engaged in an external groove thereof, the abutment 9 serving to transmit hydraulically derived actuating force from the piston to a clutch release bearing 10. In the embodiment described, the bearing 10 is preloaded in the actuating direction by a compression spring 11 surrounding a part of the housing and acting between the radially projecting circlip 9 and housing 1, the bearing retaining the cylinder housing against the gear box housing 3.

In order to prevent over-stroking of the piston, travel stop means are provided in the form of an axially fast circlip or similar device 12 carried by the sleeve 4 and an internal shoulder 13 formed on the piston 6. The shoulder 13 is formed by increasing the size of the central piston opening over a forward part of the length of the piston in the direction of its actuating travel, such opening of increased size being large enough to permit the piston to move freely past the circlip 12, in use, until the shoulder 13 comes into abutment with the circlip, whereupon, further outward movement of the piston is precluded. It will be seen that the relatively large hydraulic forces generated at the travel stop means during a potential piston over-stroke situation are transmitted by the flange 7 of the sleeve 4 to a substantial part of the housing 1 which houses the fluid inlet 8. The sleeve 4, being of relatively simple shape, can be made inexpensively from metal or other material strong enough to withstand the forces involved. Conversely, the housing 1 may be made from relatively cheap light-weight and easily fashioned material and can typically be a moulding of plastics material. This is particularly convenient, since the cylinder housing is of complex form and lends itself well to manufacture by a moulding operation.

The travel stop means performs an additional function in that it retains the piston 6 within the working chamber and, being a separately fitted item, permits the housing 1, sleeve 4 and piston 6 to be produced as a sub-assembly, prior to installation thereof in its normal position of use relative to the shaft 2 and clutch release bearing 10.

Various details of the slave cylinder of the invention may be varied from those illustrated in the drawing. For example, the circlip 9 could be replaced by an integral radial flange formed on the piston 6 and the circlip 12 can be replaced by any suitable removable abutment means. The shape of the sleeve 4 may be modified according to the nature of the installation in which it is to be

## Claims

1. An hydraulic slave cylinder comprising a cylinder housing (1) and a concentrically arranged annular piston (6) axially movable relative to the cylinder under the influence of hydraulic pressure supplied to a working chamber (5) defined partly by the cylinder housing (1) and partly by an additional sleeve component (4) separate from the housing and extending concentrically within the piston (6), the cylinder being adapted so as, in use, to be secured to or retained against fixed structure (3), and piston travel stop means of which one part (13) is on the movable piston and another part (12) is on said sleeve component, characterised in that the sleeve component (4) has a generally radial flange (7) trapped, in use, between opposed respective surfaces of the housing (1) and said fixed structure (3).

2. A cylinder according to Claim 1 characterised in that said sleeve component (4) supports the piston (6) for sliding movement thereon.

3. A cylinder according to Claim 2 characterised in that a forward part of said piston (6) in the direction of its actuating travel has a larger internal diameter than a further part supported on the sleeve (4) such as to permit said forward piston part to pass freely over said another part of the stop means (12) during part of said actuating travel, the junction between said parts forming a shoulder (13) which acts as the piston part of the piston travel stop means.

4. A cylinder according to any one of the preceding claims characterised in that the annular piston (6) is pre-loaded in the actuating direction.

5. A cylinder according to Claim 4 characterised in that pre-load is applied by a spring (11) surrounding a part of the cylinder housing (1) and acting on a radial projection (9) carried by the piston (6).

6. A cylinder according to any one of the preceding claims wherein the radial flange (7) is on one end of the sleeve component (4) and said another part of the stop means (12) is adjacent the other end of the sleeve component (4).

7. A cylinder according to any one of the preceding claims characterised in that a single seal member (6A) engages the rear end of the piston (6) and slides in sealing relationship against opposed cylindrical surfaces of the housing (1) and sleeve component (4).

## Patentansprüche

1. Ein hydraulischer Zusatzzylinder mit einem Zylindergehäuse (1), mit einem konzentrisch angeordneten, ringförmigen Kolben (6), der unter dem Einfluß hydraulischen Drucks relativ zum Zylinder axial beweglich ist, wobei der hydraulische Druck einer Arbeitskammer (5) zugeführt ist, die teilweise durch das Zylindergehäuse (1) und teilweise durch eine zusätzliche, vom Gehäuse getrennte und konzentrisch innerhalb des Kolbens (6) verlaufende Hülsenkomponente (4) bestimmt ist, und wobei der Zylinder so angepaßt ist, daß er im Gebrauch an einer ortsfesten Struktur (3) befestigt oder gegen diese gehalten wird, und mit einem Kolbenhub-Stoppmittel, von dem ein Teil (13) am beweglichen Kolben und ein anderer Teil (12) an der Hülsenkomponente vorgesehen ist, dadurch gekennzeichnet, daß die Hülsenkomponente (4) einen allgemeinen radialen Flansch (7) hat, der im Gebrauch zwischen einander gegenüberliegenden Flächen des Gehäuses (1) und der ortsfesten Struktur (3) festgelegt ist.

2. Ein Zylinder nach Anspruch 1, dadurch gekennzeichnet, daß die Hülsenkomponente (4) den Kolben (6) zum Zwecke einer gleitenden Bewegung auf ihr abstützt.

3. Ein Zylinder nach Anspruch 2, dadurch gekennzeichnet, daß ein in Richtung seines Betätigungshubes vorderer Teil des Kolbens (6) einen größeren Innendurchmesser als ein weiterer, auf der Hülse (4) abgestützter Teil hat derart, daß es dem vorderen Kolbenteil gestattet ist, frei über den anderen Teil der Stoppmittel (12) während eines Teils des Betätigungshubes zu verlaufen, wobei die Verbindung zwischen jenen Teilen eine Schulter (13) bildet, die als der Kolbenteil der Kolbenhub-Stoppmittel wirkt.

4. Ein Zylinder nach einem der voranstehenden Ansprüche, dadurch gekennzeichnet, daß der ringförmige Kolben (6) in die Betätigungsrichtung vorgespannt ist.

5. Ein Zylinder nach Anspruch 4, dadurch gekennzeichnet, daß die Vorspannung durch eine Feder (11) aufgebracht ist, die einen Teil des Zylindergehäuses (1) umgibt und auf einen radialen Vorsprung (9), der vom Kolben (6) getragen ist, einwirkt.

6. Ein Zylinder nach einem der voranstehenden Ansprüche, wobei der radiale Flansch (7) an einem Ende der Hülsenkomponente (4) und der andere Teil der Stoppmittel (12) in der Nähe des anderen Endes der Hülsenkomponente (4) vorgesehen ist.

7. Ein Zylinder nach einem der voranstehenden Ansprüche, dadurch gekennzeichnet, daß ein einziges Dichtungsglied (6A) an der hinteren Stirnseite des Kolbens (6) anliegt und abgedichtet gegen einander gegenüberliegende zylindrische Flächen des Gehäuses (1) und der Hülsenkomponente (4) gleitet.

## Revendications

1. Cylindre hydraulique récepteur, comprenant un boîtier cylindrique (1) et un piston annulaire (6) disposé concentriquement et axialement déplaçable par rapport au cylindre sous l'influence d'une pression hydraulique fournie à une chambre de travail (5) définie partiellement par le boîtier cylindrique (1) et partiellement par une partie de manchon supplémentaire (4) distincte du boîtier et s'étendant concentriquement à l'intérieur du piston (6), le cylindre étant conçu de manière à, en utilisation, être fixé à ou retenu contre une structure fixe (3), et comprenant un moyen d'arrêt de la course du piston dont une partie (13) se trouve sur le piston mobile et une autre partie (12) se trouve sur la partie de manchon (4), caractérisé en ce que la partie de manchon (4) possède une bride globalement radiale (7) emprisonnée, en utilisation, entre des surfaces opposées respectives du boîtier (1) et de la structure fixe (3).

2. Cylindre selon la revendication 1, caractérisé en ce que la partie de manchon (4) supporte le piston (6) pour un montage coulissant de ce piston sur elle.

3. Cylindre selon la revendication 2, caractérisé en ce qu'une partie avant du piston (6) dans le sens de sa course d'actionnement possède un diamètre interne supérieur à celui d'une autre partie supportée par le manchon (4), de manière à permettre à la partie avant du piston de passer librement au-dessus de l'autre partie (12) du moyen d'arrêt au cours d'une partie de la course d'actionnement, la jonction entre ces parties formant un épaulement (13) qui agit comme partie, située sur le piston, du moyen d'arrêt de la course du piston.

4. Cylindre selon l'une quelconque des revendications précédentes, caractérisé en ce que le piston annulaire (6) est précontraint dans le sens d'actionnement.

5. Cylindre selon la revendication 4, caractérisé en ce que la précontrainte est appliquée par un ressort (11) entourant une partie du boîtier cylindrique (1) et agissant sur une partie en saillie radiale (9) portée par le piston (6).

6. Cylindre selon l'une quelconque des revendications précédentes, dans lequel la bride radiale (7) se trouve sur une extrémité de la partie de manchon (4), et l'autre partie (12) du moyen d'arrêt est voisine de l'autre extrémité de la partie de manchon (4).

7. Cylindre selon l'une quelconque des revendications précédentes, caractérisé en ce qu'un unique élément d'étanchéité (6A) s'applique sur l'extrémité arrière du piston (6) et coulisse en relation étanche contre des surfaces cylindriques opposées du boîtier (1) et de la partie de manchon (4).

EP 0 168 932 B1